# EUROPEAN PATENT SPECIFICATION

(11) **EP 3 320 420 B1**
(45) Date of publication and mention of the grant of the patent: **25.10.2023**
(21) Application number: 17781376.3
(22) Date of filing: 05.04.2017
(51) Int. Cl.: H04W 4/029, G06F 3/048, G06Q 50/30

(54) **SYSTEMS AND METHODS FOR RECOMMENDING RECOMMENDED SERVICE LOCATION**
SYSTEME UND VERFAHREN ZUM EMPFEHLEN EINES EMPFOHLENEN SERVICESTANDORTS
SYSTÈMES ET PROCÉDÉS POUR RECOMMANDER UN EMPLACEMENT DE SERVICE RECOMMANDÉ

(30) Priority: 13.06.2016 CN 201610419850
(43) Date of publication of application: 16.05.2018
(73) Proprietor: BEIJING DIDI INFINITY TECHNOLOGY AND DEVELOPMENT CO., LTD., Beijing 100193 (CN)
(72) Inventor: LU, Yanjun, Beijing 100193 (CN)
(74) Representative: Barker Brettell LLP
(86) International application number: PCT/CN2017/079453
(87) International publication number: WO 2017/215322

(56) References cited:
- WO-A2-02/17654
- CN-A- 102 509 170
- CN-A- 103 542 848
- CN-A- 105 045 921
- US-A1- 2013 132 246
- US-A1- 2015 002 319
- US-A1- 2015 269 150

## Description

### CROSS-REFERENCE TO RELATED APPLICATIONS

This application claims priority to Chinese Application No. 201610419850.4 filed on June 13, 2016.

### TECHNICAL FIELD

The present disclosure generally relates to systems and methods for recommending a service location for an on-demand service, and in particular, systems and methods for recommending a service location for a transportation service through an online transportation service platform.

### BACKGROUND

With the development of Internet technology, on-demand services, such as online taxi hailing services and delivery services, have become more and more popular. Through an online on-demand service platform, a requester may request an on-demand service in the form of an on-demand service through an application installed in a user equipment, such as a smart phone terminal. Then a computer server of the platform may broadcast the on-demand service to service providers. In some cases, the performance of the on-demand service may be dependent on a location specified by the user. The computer server may recommend a recommended service location to the requester, and a service provider may efficiently pick up the requester according to the recommended service location.
We are aware of:
- US Patent Application publication US2013/0132246, which discloses a system which provides a plurality of recommendations to a user;
- US Patent Application publication US2015/0269150, which discloses the recommendation of a service location based on a user electronic device request specifying parameters that include a service type, an available time value and location information; and
- US Patent Application publication US2015/0002319, which discloses a method and system for obtaining taxi location data for a plurality of taxis in a geographic region, including providing a rating indicating a likelihood that at least one currently available taxi is available for a fare.

### SUMMARY

According to an aspect of the present disclosure, a system for recommending a service location for an on-demand service in accordance with claim 1 is provided. Optional features are recited in the dependent claims.

In some embodiments, each of the at least one historical on-demand service is associated with a historical service location.

In some embodiments, the at least one processor may further select from the at least one historical on-demand service a most recently performed on-demand service. In some embodiments, the at least one processor may further determine the historical service location corresponding to the most recently performed on-demand service as the currently recommended service location of the request.

In some embodiments, the at least one processor may further determine the historical service location from the at least one historical on-demand service that corresponds to a highest frequency of use as the currently recommended service location of the request.

In some embodiments, the at least one historical on-demand service may be associated with a requester of the request.

In some embodiments, the at least one processor may, upon non-existence of the at least one historical on-demand service, obtain a set of historically recommended service locations within a second predetermined distance from the current default service location, the set of historically recommended service locations corresponding to a set of historical on-demand services. In some embodiments, the at least one processor may further determine the currently recommended service location based on the set of historically recommended service locations.

In some embodiments, the at least one processor may obtain a frequency of use associated with each of the set of historically recommended service locations. In some embodiments, the at least one processor may determine, from the set of historically recommended service locations, a historically recommended service location with highest frequency of use as the currently recommended service location.

According to another aspect of the present disclosure, a non-transitory machine-readable storage medium is provided in accordance with claim 15.

In some embodiments, each of the at least one historical on-demand service is associated with a historical service location.

In some embodiments, the instructions may cause the at least one processor further to select from the at least one historical on-demand service a most recently performed on-demand service. In some embodiments, the instructions may cause the at least one processor further to determine the historical service location corresponding to the most recently performed on-demand service as the currently recommended service location of the request.

In some embodiments, the instructions may cause the at least one processor further to determine the historical service location from the at least one historical on-demand service that corresponds to a highest frequency of use as the currently recommended service location of the request.

In some embodiments, upon non-existence of the at least one historical on-demand service, the instructions may cause the at least one processor further to obtain a set of historically recommended service locations within a second predetermined distance from the current default service location, the set of historically recommended service locations corresponding to a set of historical on-demand services. In some embodiments, the instructions may cause the at least one processor further to determine the currently recommended service location based on the set of historically recommended service locations.

In some embodiments, the instructions may cause the at least one processor further to obtain a frequency of use associated with each of the set of historically recommended service locations. In some embodiments, the instructions may cause the at least one processor further to determine, from the set of historically recommended service locations, a historically recommended service location with highest frequency of use as the currently recommended service location.

According to a further aspect of the present disclosure, a method for recommending a service location for an on-demand service in accordance with claim 10 is provided. Optional features are recited in the dependent claims.

In some embodiments, each of the at least one historical on-demand service is associated with a historical service location.

In some embodiments, the at least one computer server may further select from the at least one historical on-demand service a most recently performed on-demand service. In some embodiments, the at least one computer server may further determine the historical service location corresponding to the most recently performed on-demand service as the currently recommended service location of the request.

In some embodiments, the at least one computer server may further determine the historical service location from the at least one historical on-demand service that corresponds to a highest frequency of use as the currently recommended service location of the request.

In some embodiments, the at least one historical on-demand service is associated with a requester of the request.

In some embodiments, upon non-existence of the at least one historical on-demand service, the at least one computer server may further obtain a set of historically recommended service locations within a second predetermined distance from the current default service location, the set of historically recommended service locations corresponding to a set of historical on-demand services. In some embodiments, the at least one computer server may further determine the currently recommended service location based on the set of historically recommended service locations.

In some embodiments, the at least one computer server may further obtain a frequency of use associated with each of the set of historically recommended service locations. In some embodiments, the at least one computer server may further determine, from the set of historically recommended service locations, a historically recommended service location with highest frequency of use as the currently recommended service location.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities and combinations set forth in the detailed examples discussed below.

### BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
FIG. 1 is a block diagram illustrating an exemplary online on-demand service system according to some embodiments of the present disclosure;
FIG. 2 is a schematic diagram illustrating an exemplary computing device in the online on-demand service system according to some embodiments of the present disclosure;
FIG. 3 is a block diagram illustrating an exemplary processing engine according to some embodiments of the present disclosure;
FIG. 4 is a flowchart illustrating an exemplary process and/or method for recommending a currently recommended service location according to some embodiments of the present disclosure;
FIG. 5 is a flowchart illustrating an exemplary process and/or method for determining the currently recommended service location according to some embodiments of the present disclosure;
FIG. 6A is a flowchart illustrating an exemplary process and/or method for determining whether at least one historical on-demand service corresponds to a request of the on-demand service according to some embodiments of the present disclosure;
FIG. 6B is a schematic diagram illustrating an exemplary diagram for determining whether the at least one historical on-demand service corresponds to the request of the on-demand service according to some embodiments of the present disclosure;
FIG. 7 is a flowchart illustrating an exemplary process and/or method for determining the currently recommended service location based on the at least one historical on-demand service according to some embodiments of the present disclosure;
FIG. 8 is a flowchart illustrating an exemplary process and/or method for determining the currently recommended service location based on a set of historically recommended service locations according to some embodiments of the present disclosure;
FIG. 9A is a schematic diagram illustrating exemplary diagrams for displaying the currently recommended service location according to some embodiments of the present disclosure; and
FIG. 9B is a schematic diagram illustrating an exemplary user interface for displaying the currently recommended service location according to some embodiments of the present disclosure.

### DETAILED DESCRIPTION

The following description is presented to enable any person skilled in the art to make and use the present disclosure, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present disclosure is not limited to the embodiments shown, but is to be accorded the widest scope consistent with the claims.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprise," "comprises," and/or "comprising," "include," "includes," and/or "including," when used in this specification, specify the presence of stated features, integers, steps, operations, elements, and/or components, but do not preclude the presence or addition of one or more other features, integers, steps, operations, elements, components, and/or groups thereof.

These and other features, and characteristics of the present disclosure, as well as the methods of operation and functions of the related elements of structure and the combination of parts and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

The flowcharts used in the present disclosure illustrate operations that systems implement according to some embodiments in the present disclosure. It is to be expressly understood, the operations of the flowchart may be implemented not in order. Conversely, the operations may be implemented in inverted order, or simultaneously. Moreover, one or more other operations may be added to the flowcharts. One or more operations may be removed from the flowcharts.

Moreover, while the system and method in the present disclosure is described primarily in regard to allocate a set of sharable orders, it should also be understood that this is only one exemplary embodiment. The system or method of the present disclosure may be applied to any other kind of on demand service. For example, the system or method of the present disclosure may be applied to transportation systems of different environments including land, ocean, aerospace, or the like, or any combination thereof. The vehicle of the transportation systems may include a taxi, a private car, a hitch, a bus, a train, a bullet train, a high speed rail, a subway, a vessel, an aircraft, a spaceship, a hot-air balloon, a driverless vehicle, or the like, or any combination thereof. The transportation system may also include any transportation system for management and/or distribution, for example, a system for sending and/or receiving an express. The application of the system or method of the present disclosure may include a webpage, a plug-in of a browser, a client terminal, a custom system, an internal analysis system, an artificial intelligence robot, or the like, or any combination thereof.

The term "passenger," "requester," "requestor," "service requester," "service requestor" and "customer" in the present disclosure are used interchangeably to refer to an individual, an entity or a tool that may request or order a service. Also, the term "driver," "provider," "service provider," and "supplier" in the present disclosure are used interchangeably to refer to an individual, an entity or a tool that may provide a service or facilitate the providing of the service. The term "user" in the present disclosure may refer to an individual, an entity or a tool that may request a service, order a service, provide a service, or facilitate the providing of the service. For example, the user may be a passenger, a driver, an operator, or the like, or any combination thereof. In the present disclosure, "passenger" and "passenger terminal" may be used interchangeably, and "driver" and "driver terminal" may be used interchangeably.

The term "request," "service," "service request," and "order" in the present disclosure are used interchangeably to refer to a request that may be initiated by a passenger, a requester, a service requester, a customer, a driver, a provider, a service provider, a supplier, or the like, or any combination thereof. The service request may be accepted by any one of a passenger, a requester, a service requester, a customer, a driver, a provider, a service provider, or a supplier. The service request may be chargeable or free.

The positioning technology used in the present disclosure may be based on a global positioning system (GPS), a global navigation satellite system (GLONASS), a compass navigation system (COMPASS), a Galileo positioning system, a quasi-zenith satellite system (QZSS), a wireless fidelity (WiFi) positioning technology, or the like, or any combination thereof. One or more of the above positioning systems may be used interchangeably in the present disclosure.

An aspect of the present disclosure relates to online systems and methods for recommending a service location for an on-demand service, such as recommending a pick-up location for taxi hailing or goods delivery service, based on the location that a user sends out a request for the service and historical service record of the user.

It should be noted that on-demand service, such as online taxi hailing including taxi transportation services, is a new form of service rooted only in post-Internet era. It provides technical solutions to users and service providers that could raise only in post-Internet era. In pre-Internet era, for example, when a user hails a taxi on street, the taxi request and acceptance occur only between the passenger and one taxi driver that sees the passenger. If the passenger hails a taxi through telephone call, the service request and acceptance may occur only between the passenger and one service provider (e.g., one taxi company or agent). Online taxi, however, allows a user of the service to real-time and automatic distribute a service request to a vast number of individual service providers (e.g., taxi) distance away from the user. It also allows a plurality of service providers to respond to the service request simultaneously and in real-time. Therefore, through Internet, the online on-demand systems may provide a much more efficient transaction platform for the users and the service providers that may never met in a traditional pre-Internet transportation service system.

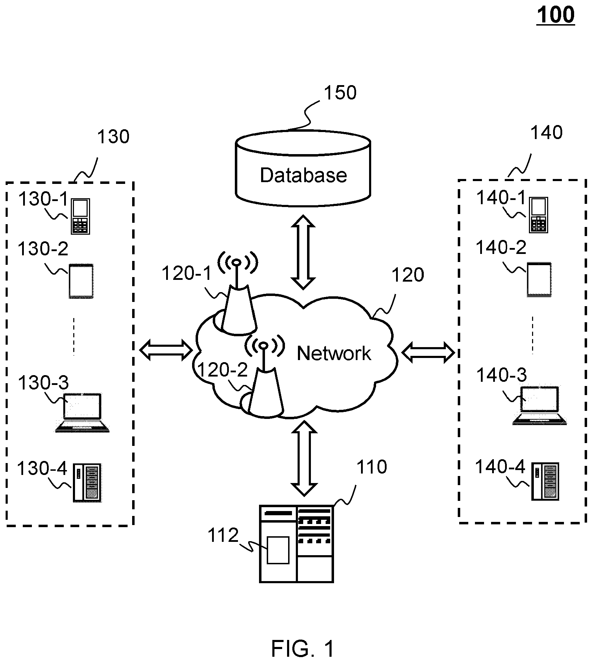

FIG. 1 is a block diagram of an exemplary online on-demand service system 100 according to some embodiments of the present disclosure. For example, the online on-demand service system 100 may be an online on-demand service platform for on-demand services such as taxi hailing service, goods delivery service, chauffeur service, express car service, carpool service, bus service, short-term driver-renting service, and shuttle service. The online on-demand service system 100 may be an online platform including a server 110, a network 120, a requester terminal 130, a provider terminal 140, and a database 150. The server 110 may include a processing engine 112.

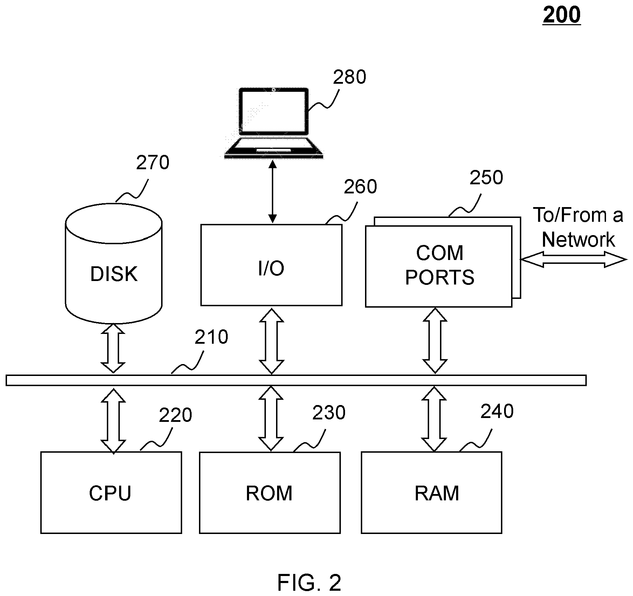

In some embodiments, the server 110 may be a single server, or a server group. The server group may be centralized, or distributed (e.g., server 110 may be a distributed system). In some embodiments, the server 110 may be local or remote. For example, the server 110 may access information and/or data stored in the requester terminal 130, the provider terminal 140, and/or the database 150 via the network 120. As another example, the server 110 may be directly connected to the requester terminal 130, the provider terminal 140, and/or the database 150 to access stored information and/or data. In some embodiments, the server 110 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof. In some embodiments, the server 110 may be implemented on a computing device 200 having one or more components illustrated in FIG. 2 in the present disclosure.

In some embodiments, the server 110 may include a processing engine 112. The processing engine 112 may process information and/or data relating to the service request to perform one or more functions described in the present disclosure. For example, the processing engine 112 may collect information of a plurality of historical on-demand services, and determine a currently recommended service location. In some embodiments, the processing engine 112 may include one or more processing engines (e.g., single-core processing engine(s) or multi-core processor(s)). Merely by way of example, the processing engine 112 may include a central processing unit (CPU), an application-specific integrated circuit (ASIC), an application-specific instruction-set processor (ASIP), a graphics processing unit (GPU), a physics processing unit (PPU), a digital signal processor (DSP), a field programmable gate array (FPGA), a programmable logic device (PLD), a controller, a microcontroller unit, a reduced instruction-set computer (RISC), a microprocessor, or the like, or any combination thereof.

The network 120 may facilitate exchange of information and/or data. In some embodiments, one or more components in the online on-demand service system 100 (e.g., the server 110, the requester terminal 130, the provider terminal 140, and the database 150) may send information and/or data to other component(s) in the online on-demand service system 100 via the network 120. For example, the server 110 may obtain/acquire service request from the requester terminal 130 via the network 120. In some embodiments, the network 120 may be any type of wired or wireless network, or combination thereof. Merely by way of example, the network 130 may include a cable network, a wireline network, an optical fiber network, a tele communications network, an intranet, an Internet, a local area network (LAN), a wide area network (WAN), a wireless local area network (WLAN), a metropolitan area network (MAN), a wide area network (WAN), a public telephone switched network (PSTN), a Bluetooth network, a ZigBee network, a near field communication (NFC) network, or the like, or any combination thereof. In some embodiments, the network 120 may include one or more network access points. For example, the network 120 may include wired or wireless network access points such as base stations and/or internet exchange points 120-1, 120-2, ..., through which one or more components of the online on-demand service system 100 may be connected to the network 120 to exchange data and/or information.

In some embodiments, a requester may be a user of the requester terminal 130. In some embodiments, the user of the requester terminal 130 may be someone other than the requester. For example, a user A of the requester terminal 130 may use the requester terminal 130 to send a service request for a user B, or receive service and/or information or instructions from the server 110. In some embodiments, a provider may be a user of the provider terminal 140. In some embodiments, the user of the provider terminal 140 may be someone other than the provider. For example, a user C of the provider terminal 140 may user the provider terminal 140 to receive a service request for a user D, and/or information or instructions from the server 110. In some embodiments, "requester" and "requester terminal" may be used interchangeably, and "provider" and "provider terminal" may be used interchangeably.

In some embodiments, the requester terminal 130 may include a mobile device 130-1, a tablet computer 130-2, a laptop computer 130-3, a built-in device in a motor vehicle 130-4, or the like, or any combination thereof. In some embodiments, the mobile device 130-1 may include a smart home device, a wearable device, a smart mobile device, a virtual reality device, an augmented reality device, or the like, or any combination thereof. In some embodiments, the smart home device may include a smart lighting device, a control device of an intelligent electrical apparatus, a smart monitoring device, a smart television, a smart video camera, an interphone, or the like, or any combination thereof. In some embodiments, the wearable device may include a smart bracelet, a smart footgear, a smart glass, a smart helmet, a smart watch, a smart clothing, a smart backpack, a smart accessory, or the like, or any combination thereof. In some embodiments, the smart mobile device may include a smartphone, a personal digital assistance (PDA), a gaming device, a navigation device, a point of sale (POS) device, or the like, or any combination thereof. In some embodiments, the virtual reality device and/or the augmented reality device may include a virtual reality helmet, a virtual reality glass, a virtual reality patch, an augmented reality helmet, an augmented reality glass, an augmented reality patch, or the like, or any combination thereof. For example, the virtual reality device and/or the augmented reality device may include a Google Glass, an Oculus Rift, a Hololens, a Gear VR, etc. In some embodiments, built-in device in the motor vehicle 130-4 may include an onboard computer, an onboard television, etc. In some embodiments, the requester terminal 130 may be a device with positioning technology for locating the position of the requester and/or the requester terminal 130.

In some embodiments, the provider terminal 140 may be similar to, or the same device as the requester terminal 130. In some embodiments, the provider terminal 140 may be a device with positioning technology for locating the position of the provider and/or the provider terminal 140. In some embodiments, the requester terminal 130 and/or the provider terminal 140 may communicate with other positioning device to determine the position of the requester, the requester terminal 130, the provider, and/or the provider terminal 140. In some embodiments, the requester terminal 130 and/or the provider terminal 140 may send positioning information to the server 110.

The database 150 may store data and/or instructions. In some embodiments, the database 150 may store data obtained from the requester terminal 130 and/or the provider terminal 140. In some embodiments, the database 150 may store data and/or instructions that the server 110 may execute or use to perform exemplary methods described in the present disclosure. In some embodiments, database 150 may include a mass storage, a removable storage, a volatile read-and-write memory, a read-only memory (ROM), or the like, or any combination thereof. Exemplary mass storage may include a magnetic disk, an optical disk, a solid-state drives, etc. Exemplary removable storage may include a flash drive, a floppy disk, an optical disk, a memory card, a zip disk, a magnetic tape, etc. Exemplary volatile read-and-write memory may include a random access memory (RAM). Exemplary RAM may include a dynamic RAM (DRAM), a double date rate synchronous dynamic RAM (DDR SDRAM), a static RAM (SRAM), a thyristor RAM (T-RAM), and a zero-capacitor RAM (Z-RAM), etc. Exemplary ROM may include a mask ROM (MROM), a programmable ROM (PROM), an erasable programmable ROM (PEROM), an electrically erasable programmable ROM (EEPROM), a compact disk ROM (CD-ROM), and a digital versatile disk ROM, etc. In some embodiments, the database 150 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

In some embodiments, the database 150 may be connected to the network 120 to communicate with one or more components in the online on-demand service system 100 (e.g., the server 110, the requester terminal 130, the provider terminal 140, etc.). One or more components in the online on-demand service system 100 may access the data or instructions stored in the database 150 via the network 120. In some embodiments, the database 150 may be directly connected to or communicate with one or more components in the online on-demand service system 100 (e.g., the server 110, the requester terminal 130, the provider terminal 140, etc.). In some embodiments, the database 150 may be part of the server 110.

In some embodiments, one or more components in the online on-demand service system 100 (e.g., the server 110, the requester terminal 130, the provider terminal 140, etc.) may have a permission to access the database 150. In some embodiments, one or more components in the online on-demand service system 100 may read and/or modify information relating to the requester, provider, and/or the public when one or more conditions are met. For example, the server 110 may read and/or modify one or more users' information after a service. As another example, the provider terminal 140 may access information relating to the requester when receiving a service request from the requester terminal 130, but the provider terminal 140 may not modify the relevant information of the requester.

In some embodiments, information exchanging of one or more components in the online on-demand service system 100 may be achieved by way of requesting a service. The object of the service request may be any product. In some embodiments, the product may be a tangible product, or an intangible product. The tangible product may include food, medicine, commodity, chemical product, electrical appliance, clothing, car, housing, luxury, or the like, or any combination thereof. The intangible product may include a service product, a financial product, a knowledge product, an internet product, or the like, or any combination thereof. The internet product may include an individual host product, a web product, a mobile internet product, a commercial host product, an embedded product, or the like, or any combination thereof. The mobile internet product may be implemented as a software of a mobile terminal, a program, a system, or the like, or any combination thereof. The mobile terminal may include a tablet computer, a laptop computer, a mobile phone, a personal digital assistance (PDA), a smart watch, a point of sale (POS) device, an onboard computer, an onboard television, a wearable device, or the like, or any combination thereof. For example, the product may be any software and/or application used in the computer or mobile phone. The software and/or application may relate to socializing, shopping, transporting, entertainment, learning, investment, or the like, or any combination thereof. In some embodiments, the software and/or application relating to transporting may include a traveling software and/or application, a vehicle scheduling software and/or application, a mapping software and/or application, etc. In the vehicle scheduling software and/or application, the vehicle may include a horse, a carriage, a rickshaw (e.g., a wheelbarrow, a bike, a tricycle, etc.), a car (e.g., a taxi, a bus, a private car, etc.), a train, a subway, a vessel, an aircraft (e.g., an airplane, a helicopter, a space shuttle, a rocket, a hot-air balloon, etc.), or the like, or any combination thereof.

FIG. 2 is a schematic diagram illustrating exemplary hardware and software components of a computing device 200 on which the server 110, the requester terminal 130, and/or the provider terminal 140 may be implemented according to some embodiments of the present disclosure. For example, the processing engine 112 may be implemented on the computing device 200 and configured to perform functions of the processing engine 112 disclosed in this disclosure.

The computing device 200 may be a general purpose computer or a special purpose computer, both may be used to implement an on-demand system for the present disclosure. The computing device 200 may be used to implement any component of the on-demand service as described herein. For example, the processing engine 112 may be implemented on the computing device 200, via its hardware, software program, firmware, or a combination thereof. Although only one such computer is shown, for convenience, the computer functions relating to the on-demand service as described herein may be implemented in a distributed fashion on a number of similar platforms, to distribute the processing load.

The computing device 200, for example, may include COM ports 250 connected to and from a network connected thereto to facilitate data communications. The computing device 200 may also include a central processing unit (CPU) 220, in the form of one or more processors, for executing program instructions. The exemplary computer platform may include an internal communication bus 210, program storage and data storage of different forms, for example, a disk 270, and a read only memory (ROM) 230, or a random access memory (RAM) 240, for various data files to be processed and/or transmitted by the computer. The exemplary computer platform may also include program instructions stored in the ROM 230, RAM 240, and/or other type of non-transitory storage medium to be executed by the CPU 220. The methods and/or processes of the present disclosure may be implemented as the program instructions. The computing device 200 also includes an I/O component 260, supporting input/output between the computer and other components therein such as user interface elements 280. The computing device 200 may also receive programming and data via network communications.

Merely for illustration, only one CPU and/or processor is described in the computing device 200. However, it should be note that the computing device 200 in the present disclosure may also include multiple CPUs and/or processors, thus operations and/or method steps that are performed by one CPU and/or processor as described in the present disclosure may also be jointly or separately performed by the multiple CPUs and/or processors. For example, if in the present disclosure the CPU and/or processor of the computing device 200 executes both step A and step B, it should be understood that step A and step B may also be performed by two different CPUs and/or processors jointly or separately in the computing device 200 (e.g., the first processor executes step A and the second processor executes step B, or the first and second processors jointly execute steps A and B).

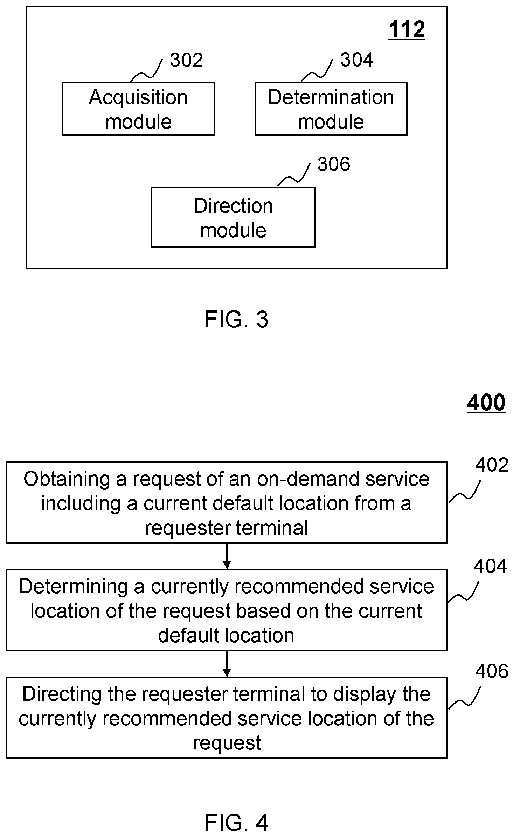

FIG. 3 is a block diagram illustrating an exemplary processing engine 112 according to some embodiments of the present disclosure. The processing engine 112 may include an acquisition module 302, a determination module 304, and a direction module 306. Each module may be a hardware circuit that is designed to perform the following actions, a set of instructions stored in one or more storage media, and/or a combination of the hardware circuit and the one or more storage media.

The acquisition module 302 may be configured to obtain a request of an on-demand service from a requester terminal. The request of the on-demand service may be a request for transportation service or goods delivery service by the requester. The request may include a current default location (e.g., a start location), a destination, or the like, or any combination thereof. The destination may be expressly defined by the requester. Alternatively, in some embodiment such as when the requester is requesting a test driving, the destination may be an open destination, that is, the requester may define no destination in the request. The acquisition module 302 may obtain the request from the requester terminal 130 via the network 120. The request may be transmitted to the determination module 304 or the direction module 306 to be further processed.

The determination module 304 may be configured to determine a currently recommended service location of the request based on the current default location. The determination module 304 may determine the currently recommended service location of the request based on the current default location corresponding to at least one historical on-demand service.

The direction module 306 may be configured to direct the requester terminal to display the currently recommended service location of the request. For example, the direction module 306 may send information relating to the request of the on-demand service to the requester terminal 130 via the network 120. The information relating to the request of the on-demand service may include the start location, the destination, the currently recommended service location, or the like, or a combination thereof.

The modules in the processing engine 112 may be connected to or communicate with each other via a wired connection or a wireless connection. The wired connection may include a metal cable, an optical cable, a hybrid cable, or the like, or any combination thereof. The wireless connection may include a Local Area Network (LAN), a Wide Area Network (WAN), a Bluetooth, a ZigBee, a Near Field Communication (NFC), or the like, or any combination thereof. Any two of the modules may be combined as a single module, any one of the modules may be divided into two or more units.

FIG. 4 is a flowchart illustrating an exemplary process and/or method 400 for recommending a recommended service location for an on-demand service according to some embodiments of the present disclosure. The process and/or method 400 may be executed by the online on-demand service system 100. For example, the process and/or method 400 may be implemented as a set of instructions (e.g., an application) stored in database 150, storage ROM 230 and/or RAM 240. The processing engine 112 and/or the CPU 220 may execute the set of instructions and may accordingly be directed to perform the process and/or method 400. The CPU 220 may be a processor of a computer server supporting an online on-demand service platform. The platform may be an Internet-based platform that connects on-demand service providers and requesters through Internet.

In step 402, the processing engine 112 may obtain a request of an on-demand service from a requester terminal. The processing engine 112 in FIG. 1 may include the CPU 220 in FIG. 2, and may be configured to perform functions described in the present disclosure. The on-demand services may be a transportation service by a taxi, a private vehicle, a bus, or a truck; a test drive service, a designated driving service, or the like, or a combination thereof. In some embodiments, the on-demand service may be other delivery service booked on-line, such as on-line booking a meal, on-line shopping, or the like, or a combination thereof. In some embodiments, the on-demand service may be a service of taking an object from one place to another in a vehicle, such as goods delivery. The vehicle may include a non-motor vehicle (e.g., a bicycle or a tricycle), a motor vehicle (e.g., a car or a truck), a watercraft (e.g., a ship or a boat) and/or an aircraft. In some embodiments, the vehicle may be unmanned. For example, the on-demand service may be a taxi service.

The request of the on-demand service may include a real-time request, an appointment request, or a pending request. For example, the real-time request may be a request that requires a service provider to immediately process and start the service, and/or a service of which the requester wishes to receive the service at the present moment or at a defined time reasonably close to the present moment for an ordinary person in the art. For example, a request may be a real-time request if the defined time is shorter than a threshold value, such as 1 minute, 5 minutes, 10 minutes or 20 minutes. The appointment request may refer to a request that does not require the service provider to immediately start the service and/or the requester wishes and/or expects to receive the service at a defined time which is reasonably long from the present moment for the ordinary person in the art. For example, a service request may be an appointment request if the defined time is longer than a threshold value, such as 20 minutes, 2 hours, or 1 day. In some embodiments, the processing engine 112 may define the real-time request or the appointment request based on a time threshold. The time threshold may be default settings of the online on-demand service system 100, or may be adjustable depending on different situations. For example, in a traffic peak period, the time threshold may be relatively small (e.g., 10 minutes, meaning that the requested service may be delivered within 10 minutes to qualify as a real-time service), otherwise in idle period (e.g., 10:00-12:00 am), the time threshold may be relatively large (e.g., 1 hour). The pending request may be an on-going request which is in progress by a service provider at the present moment.

The request of the on-demand service may include a current default service location. For example, for a real-time request, the current default service location (e.g., a start location) may be a current location of the requester (e.g., the current default location for a real-time taxi hailing service may be a start location for a taxi hailing service). For an appointment request, the current default service location may be a defined location by the requester. In some embodiments, the processing engine 112 may obtain the current default service location of the requester terminal 130 via a Global Position System (GPS) installed in the requester terminal 130. In some embodiments, the requester may also input the current default service location via the requester terminal 130, and then, the processing engine 112 may retrieve the current default service location from the request. For example, the requester may first login the online on-demand service system 100 via the requester terminal 130, and then may textually input the current default service location via the requester terminal 130. In another example, the terminal 130 may display a map (e.g., a Tencent^{™} Map, a Google^{™} Map) to the requester, and the requester may manually define the current default service location by identifying a geographic position (e.g., a bus station, a metro station, a crossroad, a landmark building) on the map. As a further example, the requester may scan a quick response (QR) code posted on the geographic position to define his/her current location.

The processing engine 112 may further generate a service order of the on-demand service based on the request of the on-demand service. The service order of the on-demand service may include basic route information, delivery information, vehicle information, requester information, or the like, or a combination thereof. For a specific service order, the basic route information may include a number of passengers, a start location, a destination, a mileage, a pick-up time, an estimated fee, a unit price (e.g., a unit price per kilometer or per mile), a congested portion of the route (e.g., a congested road due to traffic peak), or the like, or a combination thereof. The delivery information may include a type of goods (e.g., liquid or solid, fragile or non-fragile), a size (e.g., length, width, height), a volume, a weight, or the like, or a combination thereof. The vehicle information may include a number of seats in a vehicle, a trunk volume, a load capacity (i.e., a weight of products that the vehicle can carry), or the like, or a combination thereof. The requester information may include name information (e.g. a first name, a last name, a nickname, a username), contact information (e.g., a cell phone number, an email address), an identity code (ID), a country, a city, a gender, a date of birth, etc. In some embodiments, the information may be input by the requester or may be chosen by the requester from a plurality of default options set by the online on-demand service system 100.

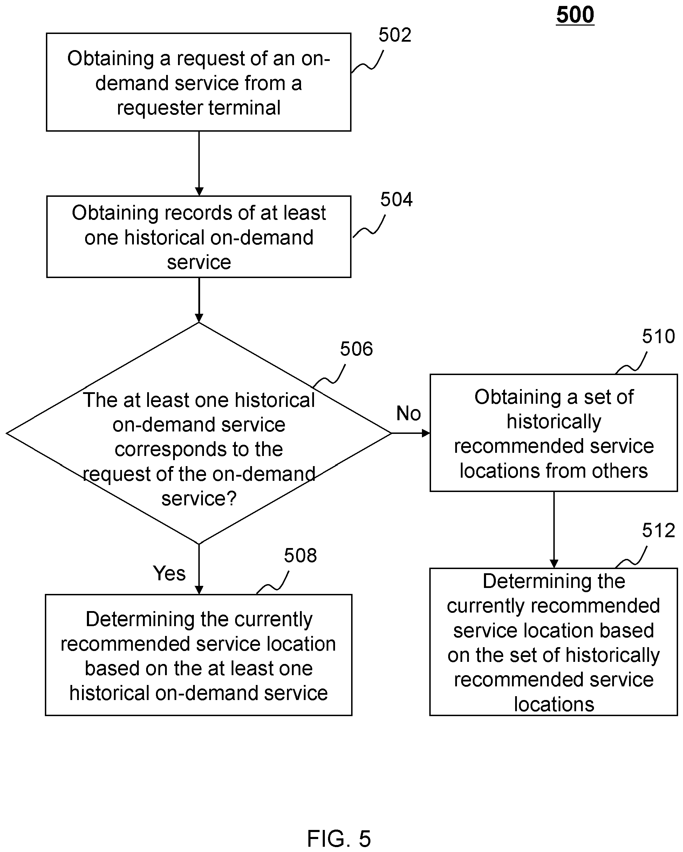

In step 404, the processing engine 112 may determine a currently recommended service location of the request based on the current default location. Detailed process and/or method of determining the currently recommended service location of the request based on the current default location is illustrated in FIG. 5.

For example, if a passenger sends out a request of a taxi haling service at a current default location, and historical service records show that at least one historical service is requested at the same current default location and/or at a location within a predetermined distance from the same current default location, the processing engine 112 may determine the currently recommended service location of the request to the passenger based on the at least one historical service. The at least one historical service may be requested by the passenger or other passenger(s). As another example, when the historical service records show that there are more than two historical service locations within the predetermined distance from the same current default location, the processing engine 112 may determine the currently recommended service location based on frequencies of use of the more than two historical service locations.

For a goods delivery service, the currently recommended service location may be a location where the service requester meets with the delivery person to pick up the goods; for a taxi hailing service, the currently recommended service location may be a pick-up location recommended by the online on-demand service system 100. The pick-up location may be and/or include a location for a requester to start an on-demand service and/or for a provider to meet the requester. For example, for a real-time taxi hailing service, if a current location of a requester is in an inner area of a shopping mall, the processing engine 112 may determine an outside location of the shopping mall as a pick-up location.

FIG. 5 is a flowchart illustrating an exemplary process and/or method 500 for determining the currently recommended service location according to some embodiments of the present disclosure. In some embodiments, the process and/or method 500 may be executed by the online on-demand service system 100 as illustrated in FIG. 1. For example, the process and/or method 500 may be implemented as at least one set of instructions stored in database 150, storage ROM 230 and/or RAM 240. The CPU 220 may execute the set of instructions and may accordingly be directed to perform the process and/or method 500. The CPU 220 may be a processor of a computer server supporting an online on-demand service platform. The platform may be an Internet-based platform that connects on-demand service providers and requesters through Internet.

In step 502, the processing engine 112 may obtain a request of an on-demand service from a requester terminal. The processing engine 112 in FIG. 1 may include the CPU 220 in FIG. 2, and may be configured to perform functions described in the present disclosure. As described in connection with step 402, the request of the on-demand service may be a request for a transportation service or goods delivery service by the requester. The request of the on-demand service may include a current default location.

In step 504, in response to the request of the on-demand service from the requester, the processing engine 112 may obtain records of at least one historical on-demand service.

The at least one historical on-demand service may be historical on-demand service requested by the requester of the current on-demand service request. For example, prior to the request of the on-demand service, the processing engine 112 may collect the requester profiles in the online on-demand service system 100 and extract the requester's historical on-demand services consumption records. The online on-demand service system 100 may then establish a database (e.g., the database 150), where the historical on-demand services of the registered requester may be recorded and categorized. The at least one historical on-demand service may include a historical default service location. For example, the historical default service location may be a historical start location for a taxi hailing service requested by the requester. In some embodiments, the at least one historical on-demand service may be requested by the requester within a time period. The time period may be a time period manually preset by a user or an administrator of the online on-demand service system 100, or adaptively set the processing engine 112 according to actual scenarios.

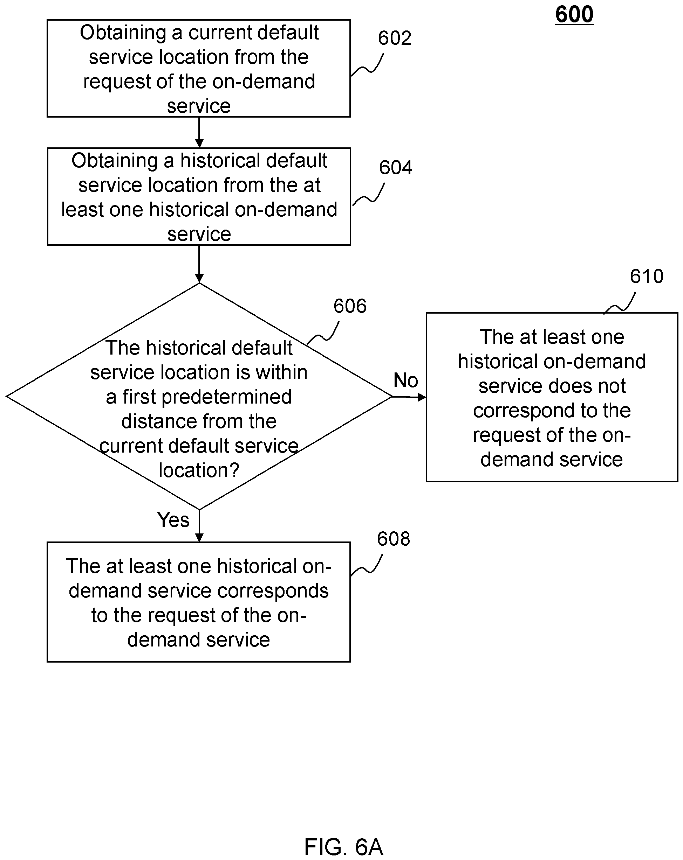

In step 506, the processing engine 112 may determine whether the at least one historical on-demand service corresponds to the request of the on-demand service. Detailed process and/or method of determining whether the at least one historical on-demand service corresponds to the request of the on-demand service is illustrated in FIG. 6A.

For example, the processing engine 112 may determine whether the historical default service location of the at least one historical on-demand service is within a predetermined distance from the current default service location. If the conclusion is positive, the processing engine 112 may determine that the historical default service location and the current default service location are similar; otherwise, the processing engine 112 may determine that the historical default service location and the current default service location are not similar.

When the historical default service location of the at least one historical on-demand service and the current default service location are similar, the processing engine 112 may determine the at least one historical on-demand service corresponds to the request of the on-demand service, and then may execute step 508 to determine the currently recommended service location based on the at least one historical on-demand service. When the historical default service location of the at least one historical on-demand service and the current default service location are not similar, the processing engine 112 may execute step 510 to obtain a set of historical on-demand services. The set of historical on-demand services may be requested by other requester/requesters. The other requester/requesters may be different from the requester of the current on-demand service.

FIG. 6A is a flowchart illustrating an exemplary process and/or method 600 for determining whether the at least one historical on-demand service corresponds to the request of the on-demand service according to some embodiments of the present disclosure. In some embodiments, the process and/or method 600 may be executed by the online on-demand service system 100 as illustrated in FIG. 1. For example, the process and/or method 600 may be implemented as at least one set of instructions stored in database 150, storage ROM 230 and/or RAM 240. The CPU 220 may execute the set of instructions and may accordingly be directed to perform the process and/or method 600.

In step 602, the processing engine 112 may obtain and/or extract a current default service location from the request of the on-demand service. The processing engine 112 in FIG. 1 may include the CPU 220 in FIG. 2, and may be configured to perform functions described in the present disclosure. As described in connection with step 502, the current default service location (e.g., the start location) may be a current location of the requester (e.g., for real-time service request) or a defined location by the requester (e.g., for appointment service request).

In step 604, the processing engine 112 may obtain and/or extract a historical default service location from the at least one historical on-demand service. As described in connection with step 504, the at least one historical on-demand service may be requested by the requester of the current on-demand service request. For example, the historical default service location may be a start location of a historical taxi hailing service recorded.

In step 606, the processing engine 112 may determine whether the historical default service location is within a first predetermined distance from the current default service location. The first predetermined distance may include an administrative area (e.g., a district in a city), or a geographical area (e.g., within a certain radius from a defined center location). For example, the processing engine 112 may obtain a current default service location of the requester and determine a geographical area within a certain predetermined radius (e.g., 50 meters) from the current default service location of the requester. Value of the predetermined radius may vary depending on the current default service location of the requester. For example, the predetermined radius may be smaller (e.g., 30 meters) if the current default service location of the requester is in a highly-populated area (e.g., downtown Manhattan), whereas the predetermined radius may be larger (e.g., 100 meters) if the current default service location of the requester is in a less populated area (e.g., rural area of Paris). It should be noted that the description above is just for illustrative purpose. The first predetermined distance may be set according to the road condition, a size of a geographical area encompassing the historical default service location and the current default service location, etc.

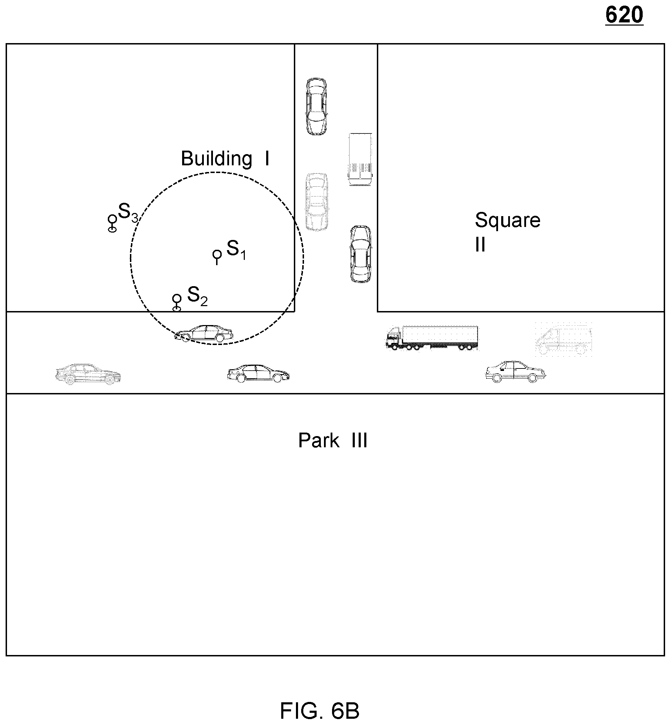

As illustrated in FIG. 6B, diagram 620 illustrates an area corresponding to a T-junction of two streets. The area may include three regions, such as Building I, Square II, Park III, etc. Building I may correspond to an area encompassing a group of default service locations. Each default service locations may include a location data point specified in an on-demand service request by a requester. The location data point may include a geographic position (e.g., a bus station, a subway station, a crossroad, a landmark building, etc.), an address (e.g., No.3 Haidian Street), longitude and latitude of the geographic position (e.g., (longitude 116.320875, latitude 39.98977)).

For example, if a requester sends a request of an on-demand service and the requester is in location S₁, the processing engine 112 may obtain the location S₁ as a current default service location, while locations S₂ and S₃ are historical default service locations from historical on-demand services requested by the requester. The distance between the location S₂ and the location S₁ is 350 meters, and the distance between the location S₃ and the location S₁ is 450 meters. If a first predetermined distance from the location S₁ is 400 meters, then the processing engine 112 may determine the location S₂ is within the first predetermined distance from the current default location.

It should be noted that the description in FIG. 6B is merely provided for the purposes of illustration, and not intended to limit the scope of the present disclosure.

In some embodiments, in response to the determination that there exists a historical default service location within a first predetermined distance from the current default service location, the processing engine 112 may proceed to step 608 and determine that the at least one historical on-demand service corresponds to the request of the on-demand service. For example, in FIG. 6B, because the location S₂ is within the first predetermined distance from the location S₁, the processing engine 112 may determine that the historical on-demand service including and/or corresponding to the location S₂ corresponds to the request of the on-demand service.

In some embodiments, in response to the determination that the historical default service location is not within a first predetermined distance from the current default service location, the processing engine 112 may proceed to step 610 and determine that the at least one historical on-demand service does not correspond to the request of the on-demand service. For example, as illustrated in FIG. 6B, the processing engine 112 may determine that the historical on-demand service including and/or corresponding to the location S₃ does not correspond to the request of the on-demand service.

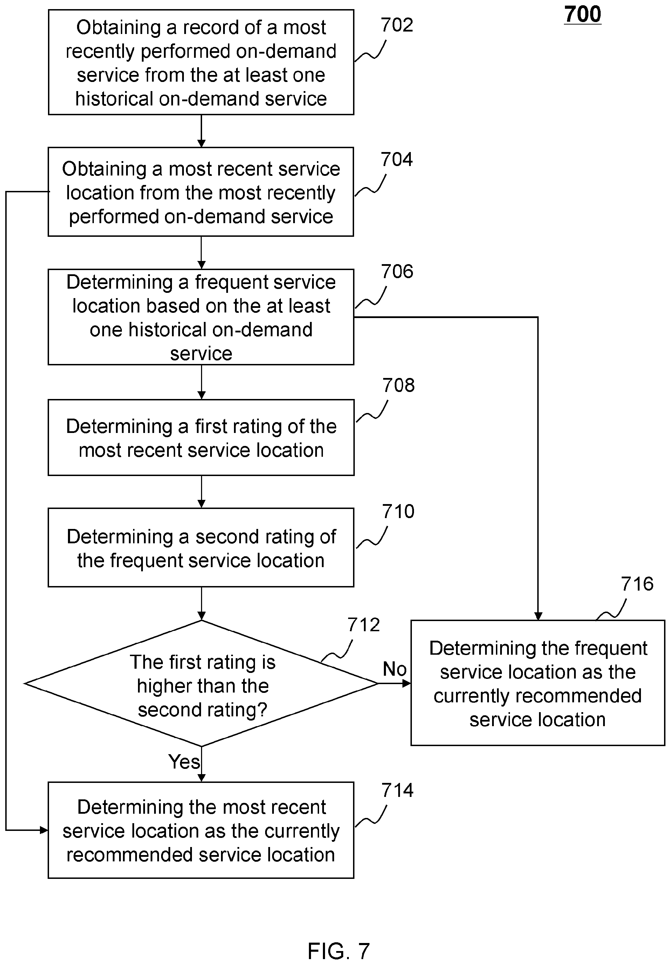

Referring back to FIG. 5, in step 508, in response to the determination that the at least one historical on-demand service corresponds to the request of the on-demand service, the processing engine 112 may determine the currently recommended service location based on the at least one historical on-demand service. For example, for a goods delivery service, the currently recommended service location may be a location where the service requester meets with the delivery person to pick up the goods; for a taxi hailing service, the currently recommended service location may be a pick-up location recommended by the online on-demand service system 100. The pick-up location may be and/or include a location for a requester to start an on-demand service and/or for a provider to meet the requester. For example, for a real-time taxi hailing service, if a current location of a requester is in an inner area of a shopping mall, the processing engine 112 may determine an outside location of the shopping mall as a pick-up location. Detailed process and/or method of determining the current recommended service location is illustrated in FIG. 7.

FIG. 7 is a flowchart illustrating an exemplary process and/or method 700 for determining the currently recommended service location based on at least one historical on-demand service according to some embodiments of the present disclosure. In some embodiments, the process and/or method 700 may be executed by the online on-demand service system 100 as illustrated in FIG. 1. For example, the process and/or method 700 may be implemented as at least one set of instructions stored in database 150, storage ROM 230 and/or RAM 240. The CPU 220 may execute the set of instructions and may accordingly be directed to perform the process and/or method 700.

In step 702, the processing engine 112 may obtain and/or select a most recently performed on-demand service from the at least one historical on-demand service. As used herein, the most recently performed on-demand service may be the most recent historical service requested by the current on-demand service requester. The processing engine 112 may obtain the most recently performed on-demand service from the database 150 shown in FIG. 1. In some embodiments, for a real-time request, a performed on-demand service (i.e., a historical on-demand service) may be a service performed within a threshold value (e.g., 5 hours, 1 day, 10 days, etc.). The time threshold may be default settings of the online on-demand service system 100, or may be adjustable depending on different situations. For example, if a passenger sends out a request of a taxi hailing service at a location DSL₁, and historical records of the passenger show that the passenger sends out a historical taxi hailing service request R₁ at the location DSL₁ yesterday and a historical taxi hailing service request R₂ at the location DSL₁ the day before yesterday, the processing engine 112 may select the historical taxi hailing service request R₁ as the most recently performed on-demand service. As another example, if a requester currently sends out a request of a goods delivery service at a location DSL₂, and historical records of the requester show that the requester most recently sends out a historical taxi hailing service request R₃ at the location DSL₂, the processing engine 112 may select the historical service request R₃ as a most recently performed on-demand service.

In step 704, the processing engine 112 may obtain and/or extract a most recent service location from the most recently performed on-demand service. As used herein, the most recent service location may be an actual service location where the requester started and/or met a provider for the most recently performed on-demand service. For example, if in the most recently performed on-demand service, the requester sent out the request at a start location DSL₃ and met a provider at a pick-up location PL₁, the processing engine 112 may obtain the pick-up location PL₁ as a most recent service location. In some embodiments, the processing engine 112 may then execute step 714 to determine the most recent service location as the currently recommended service location.

In some embodiments, the processing engine 112 may determine another actual service location corresponding to a highest frequency of use (i.e., a frequent service location). In step 706, the processing engine 112 may determine a frequent service location based on the at least historical on-demand service. As used herein, the frequent service location may be an actual service location of a historical on-demand service recorded having a highest frequency of use. The frequency of use may refer to a number of services received during a reference period of time, such as twice a day, once a week, five times a week, etc. For example, if the reference period of time is one week, and during the past week historical records of a passenger show that the passenger sends out five historical taxi hailing service requests at a location DSL₄ and received and/or started the five historical taxi hailing services at a pick-up location PL₂, while at the same location DSL₄, the passenger sent another historical taxi hailing service request and received and/or started the another historical taxi hailing service at a pick-up location PL₃, the processing engine 112 may determine the pick-up location PL₂ with higher frequency of use. Further, if PL₂ is a location of the highest frequency of use, the processing engine 112 may determine PL₂ as a frequent service location. In some embodiments, the processing engine 112 may then execute step 716 to determine the frequent service location as the currently recommended service location.

In some embodiments, the processing engine 112 may further determine the currently recommended service location based on the most recent service location and the frequent service location. For example, the processing engine 112 may respectively determine a degree of recommendation for the most recent service location and the frequent service location, and then choose one of the two locations with higher degree of recommendation as the currently recommended service location.

To this end, in step 708, the processing engine 112 may determine a first rating to the most recent service location. The rating may include high, medium, low, etc. The rating may be influenced by a plurality of factors, such as a time interval (e.g., an hour, a day, a week, a month) between the last time service at the most recent service location and the present time, a frequency of use (e.g., five times a week, twice a month), a distance from a start location (e.g., 30 m, 50 m, 100 m), etc. In some embodiments, the first rating may decay as the time interval becomes longer. For example, the processor 112 may determine the first rating as high if the most recent service location was used as an actual pick-up location within an hour; the processor 112 may determine that the first rating is low if the most recent service location was not used as an actual pick-up location within a month. The processor 112 may do the same to the second rating and may select either the most recent service location or the frequent service location, whichever has a higher rating.

As another example, the rating may be determined based on a predetermined rule. For example, the predetermined rule may be to compare a ratio to a predetermined value, wherein the ratio is between a usage number of the most recent service location to a usage number of the frequent service location in the same period. If the ratio is higher than the predetermined value, then the processor 112 may determine that the rating of the most recent service location is high and the rating of the frequent service location is low. If the ration is lower than the predetermined value, then the processor 112 may determine that the rating of the most recent service location is low and the rating of the frequent service location is high. For example, if historical records of a passenger show that in the past week, PL₄ only serves as the most recent service location for a start location, but at the same start location, the passenger received services at a pick-up location PL₅ five times, the processing engine 112 may determine that ratio of the usage number of the pick-up location PL₄ to the usage number of the pick-up location PL₅ is 0.2. Further, if the predetermined value is 0.5, the processing engine 112 may determine the rating of the pick-up location PL₄ is low and the rating of the pick-up location PL₅ is high. The predetermine value may be default settings of the online on-demand service system 100, or may be adjustable depending on different situations.

In step 710, the processing engine 112 may determine a second rating to the frequent service location. For example, if historical records of a passenger show that the passenger sent out service requests at a start location and received and/or started the services at a pick-up location PL₆ five times this week, while at the same start location, the passenger starts services at a pick-up location PL₇ five times last week, the processing engine 112 may determine that the rating of the pick-up location PL₆ is high and the rating of the pick-up location PL₇ is low.

In step 712, the processing engine 112 may determine whether the first rating is higher than the second rating. For example, the processing engine 112 may determine that the rating of the most recent service location where the passenger started service this week is higher than that of the frequent service location where the passenger started service a few weeks ago. In some embodiment, in response to the determination that the first rating is higher than the second rating, the processing engine 112 may proceed to step 714 and determine the actual service location as the currently recommended service location. In some embodiment, in response to the determination that the first rating is lower than the second rating, the processing engine 112 may proceed to step 716 and determine the frequent service location as the currently recommended service location.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. For example, when the at least historical on-demand service not including a frequent service location, step 704 may proceed to step 714. As another example, the processing engine 112 may skip steps 702, 704 and 708-714, and proceed to steps 706 and 716.

Referring back to FIG. 5, in step 510, in response to the determination that the at least one historical on-demand service does not correspond to the request of the on-demand service, the processing engine 112 may obtain a set of historically recommended service locations from others (e.g., the database 150, other requesters' terminals). The set of historically recommended service locations may correspond to a set of historical on-demand services of other requesters. For example, the processing engine 112 may collect user profiles of all or portion of the other requesters registered in the online on-demand service system 100 and extract their respective historical user's presences. The processing engine 112 may analyze and obtain a set of historical on-demand services depending on different situations. For example, when the processing engine 112 recommends a pick-up location for a real-time taxi hailing service, the processing engine 112 may analyze historical pick-up locations of other passengers' historical taxi hailing services. As another example, when the processing engine 112 recommends a service location for a goods delivery service, the processing engine 112 may analyze historically service locations of other requesters' historical goods delivery services.

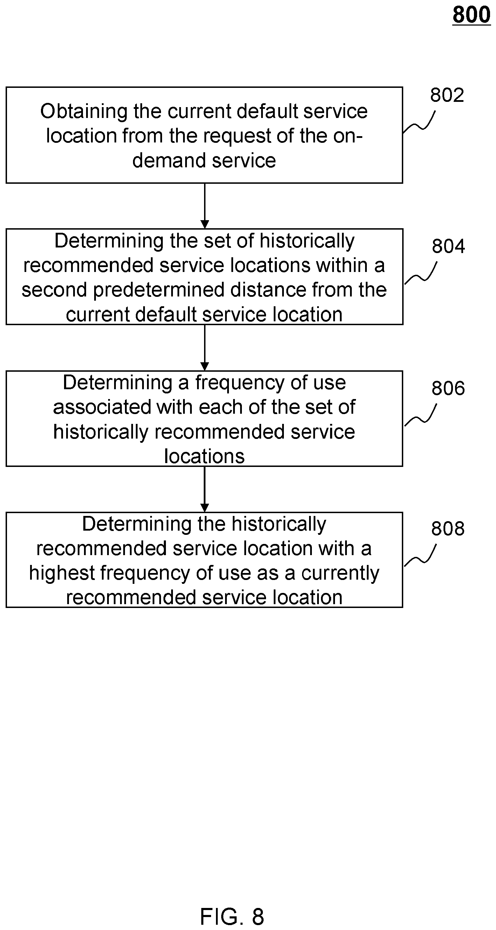

In step 512, the processing engine 112 may determine the currently recommended service location based on the set of historically recommended service locations. Detailed process and/or method of determining the current recommended service location based on the set of historically recommended service locations is illustrated in FIG. 8.

In some embodiments, the processing engine 112 may determine the currently recommended service location based on a frequency of use associated with each of the set of historically recommended service locations. For example, when a new registered passenger requests a taxi hailing service at a start location, because there is no historical records for the new passenger, the processing engine 112 may obtain a set of historical pick-up locations of other passengers recorded in the online on-demand service system 100 and determine a current pick-up location with highest frequency of use based on the set of historical pick-up locations.

In some embodiments, the processing engine 112 may determine the currently recommended service location based on a distance ranking from each of the set of historically recommended service locations to the current default service location. For example, the processing engine 112 may obtain the set of historical pick-up locations recorded in the online on-demand service system 100 and a distance ranking from each of the set of historical pick-up locations to the start location, and further determine the historical pick-up location in the shortest distance as the current pick-up location.

FIG. 8 is a flowchart illustrating an exemplary process and/or method 800 for determining the currently recommended service location based on a set of historically recommended service locations of a plurality of requesters in general according to some embodiments of the present disclosure. In some embodiments, the process and/or method 800 may be executed by the online on-demand service system 100 as illustrated in FIG. 1. For example, the process and/or method 800 may be implemented as at least one set of instructions stored in database 150, storage ROM 230 and/or RAM 240. The CPU 220 may execute the set of instructions and may accordingly be directed to perform the process and/or method 800.

In step 802, the processing engine 112 may obtain and/or extract the current default service location from the request of an on-demand service. The processing engine 112 may include the CPU 220 and configured to perform functions described in the present disclosure. As described in connection with step 502, the current default service location (e.g., the start location) may be a current location of the requester (e.g., for real-time service request) or a defined location by the requester (e.g., for appointment service request).

In step 804, the processing engine 112 may determine the set of historically recommended service locations within a second predetermined distance from the current default service location. As described in connection with step 510, the set of historically recommended service locations may correspond to a set of historical on-demand services of other requesters. The second predetermined distance may include an administrative area (e.g., a district in a city), or a geographical area (e.g., within a certain radius from a defined center location). For example, the processing engine 112 may obtain a start location of the passenger for a taxi hailing service, and determine a geographical area within a certain predetermined radius (e.g., 50 m) from the start location. Value of the predetermined radius may vary depending on the current default service location. For example, the predetermined radius may be smaller (e.g., 30 m) if the start service location is in a highly-populated area (e.g., downtown Manhattan), whereas the predetermined radius may be larger (e.g., 100 m) if the start location of the passenger is in a less populated area (e.g., rural area of Paris). It should be noted that the description above is just for illustrative purpose. The second predetermined distance may be set according to the road condition, a size of a geographical area encompassing the historical default service location and the current default service location, etc.

In step 806, the processing engine 112 may determine a frequency of use associated with each of the set of historically recommended service locations. The frequency of use may refer to a number of services received during a reference period of time, such as twice a day, once a week, five times a week, etc. The reference period may be set manually or adaptively according to real scenarios. For example, when a passenger requests a taxi hailing at a start location and the start location locates in a road that is closed for roadwork, the processing engine 112 may determine a frequency of use associated with each of the set of historically recommended service locations recorded as the road closed. It should be noted that the description above is just for illustrative purpose. The period may also be adaptively according to other real scenarios, such as security reason, structures building, nature disaster, road condition, etc.

In step 808, the processing engine 112 may determine the historically recommended service location with a highest frequency of use as a currently recommended service location. For example, when a passenger requests for a taxi hailing service at a start location where the passenger has never requested a service before, while according to other passengers' records in the same day, a historical pick-up location PL₈ within a threshold distance of the start location served as an actual pick-up location for ten times and a historical pick-up location PL₉ within the threshold distance of the start location served as an actual pick-up location for six times, the processing engine 112 may determine the historical pick-up location PL₈ as the pick-up location to be recommended to the passenger.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure.

Referring back to FIG. 4, in step 406, the processing engine 112 may direct the requester terminal to display the currently recommended service location of the request. For example, the processing engine 112 may send information relating to the request of the on-demand service to the requester terminal 130. The information relating to the request of the on-demand service may include the start location, the destination (which may or may not be defined by the requester), the currently recommended service location, or the like, or a combination thereof. The currently recommended service location may be recommended and/or displayed in the form of list and/or in graphic form. The graphic form may include a pin, a flag, a circle, an emotion icon, or the like, or a combination thereof.

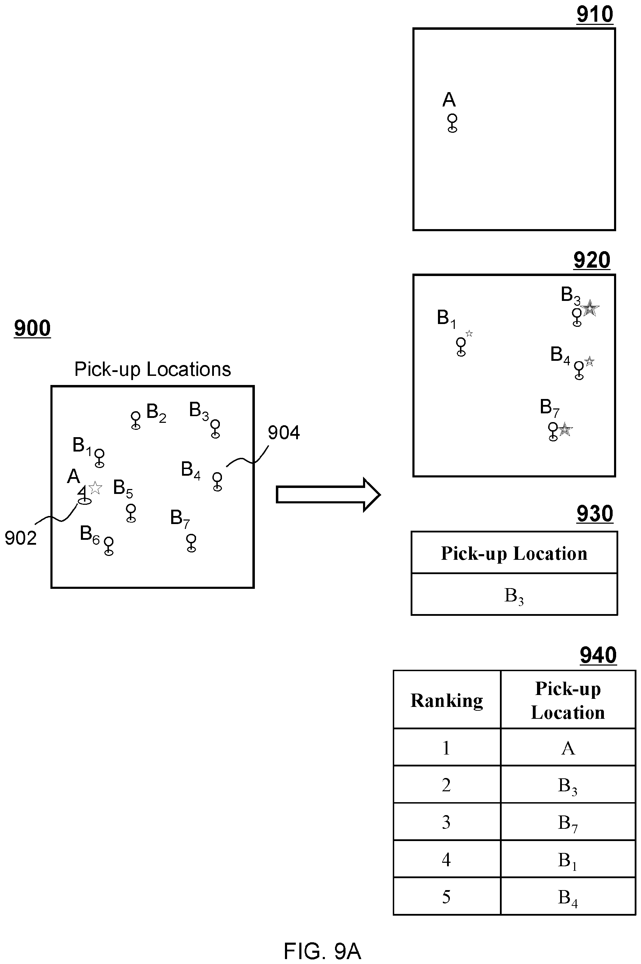

FIG. 9A illustrates exemplary diagrams 900-940 for displaying the currently recommended service location of the request according to some embodiments of the present disclosure. For example, as illustrated in FIG. 9A, diagrams 900-920 illustrate pick-up locations for a taxi hailing service in graphic forms displayed in the requester terminal 130. Diagram 900 illustrates that the requester terminal may display the pick-up location 902 (e.g., location A may be the actual service location) and the pick-up locations 904 (e.g., locations B₁, B₂, ..., B₇ are service locations having frequencies of use). The location A may be the currently recommended service location with a hollow pentagram among the pick-up locations as illustrated in diagram 900. Diagram 910 illustrates that the requester terminal may display the pick-up location 902 without the pick-up locations 904. Diagram 920 illustrates that the requester terminal may display the service locations with top four frequencies of use among locations B₁, B₂, ..., B₇. The service locations with top four frequencies of use may be displayed with different sizes of pentagrams. The biggest size of pentagram may represent the service location with the highest frequency of use (e.g., the frequent service location B₃), and vice versa. For example, when the ranking of the service locations with top four frequencies of use is location B₃, location B₇, location B₄, and location B₁, the sizes of pentagrams are varied based on the ranking as illustrated in diagram 920.

In another example, as illustrated in FIG. 9A, diagrams 930 and 940 illustrate pick-up locations for a taxi hailing service in the form of list displayed in the requester terminal 130. Diagram 930 illustrates that the requester terminal may display a pick-up location list including the frequent service location B₃ among the locations. Diagram 940 illustrates that the requester terminal may display a pick-up location ranking list including the actual service location A and the service locations with top four frequencies of use. The ranking of the pick-up locations may be ranked based on the ratings (e.g., as described in connection with FIG. 7).

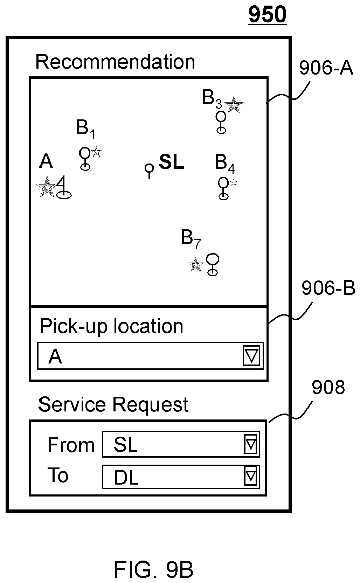

FIG. 9B illustrates an exemplary user interface 950 for displaying the currently recommended service location of the request according to some embodiments of the present disclosure. The user interface 950 for requester usage may be shown on the requester terminal 130 when the processing engine 112 directs the requester terminal 130 to display the currently recommended service location of the request.

For example, in the user interface 950, for a taxi hailing service, the recommendation of the pick-up locations of the taxi hailing service request are displayed in box 906-A and/or box 906-B, while the taxi hailing service request including the start location SL and the destination DL are displayed in box 908. The box 906-A illustrates pick-up locations for the taxi hailing service in graphic forms. The box 906-B illustrates pick-up locations for the taxi hailing service in the form of list.

It should be noted that the description in FIGs. 9A and 9B are merely provided for the purposes of illustration, and not intended to limit the scope of the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit," "module," or "system." Furthermore, aspects of the present disclosure may take the form of a computer program product embodied in one or more computer readable media having computer readable program code embodied thereon.

A computer readable signal medium may include a propagated data signal with computer readable program code embodied therein, for example, in baseband or as part of a carrier wave. Such a propagated signal may take any of a variety of forms, including electro-magnetic, optical, or the like, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable signal medium may be transmitted using any appropriate medium, including wireless, wireline, optical fiber cable, RF, or the like, or any suitable combination of the foregoing.

Computer program code for carrying out operations for aspects of the present disclosure may be written in any combination of one or more programming languages, including an object oriented programming language such as Java, Scala, Smalltalk, Eiffel, JADE, Emerald, C++, C#, VB. NET, Python or the like, conventional procedural programming languages, such as the "C" programming language, Visual Basic, Fortran 2003, Perl, COBOL 2002, PHP, ABAP, dynamic programming languages such as Python, Ruby and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS).

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

## Claims

1. A system for recommending a service location for an on-demand service, comprising:
at least one storage medium (230, 240) storing a set of instructions for recommending a service location for an on-demand service; and
at least one processor (112) configured to communicate with the at least one storage media (230, 240) to execute the set of stored instructions to:
receive a request of an on-demand service request entered by a requester on a requester terminal, the service request including a current default service location through a wireless network (120); the processor (112) additionally being configured to
determine whether at least one historical on-demand service exists, wherein the at least one historical on-demand service is requested by the requester and each of the at least one historical on-demand service is associated with a historical default service location within a first predetermined distance from the current default service location;
upon existence of the at least one historical on-demand service, determine a currently recommended service location for the request based on the at least one historical on-demand service;
upon non-existence of the at least one historical on-demand service, obtain a set of historically actual service locations, the set of historically actual service locations associated with a set of historical on-demand services of other requesters;
determine a currently recommended service location for the request based on a distance ranking from each of the set of historically actual service locations to the current default service location or a frequency of use of each of the set of historically actual service locations; and
direct the requester terminal to display the currently recommended service location of the request.

2. The system of claim 1, wherein each of the at least one historical on-demand service is associated with a historical actual service location.

3. The system of claim 2, wherein the at least one processor (112) is further directed to:
select from the at least one historical on-demand service a most recently performed on-demand service; and
determine the historical actual service location of the most recently performed on-demand service as the currently recommended service location of the request.

4. The system of claim 2, wherein the at least one processor (112) is further directed to:
determine the historical actual service location from the at least one historical on-demand service that corresponds to a highest frequency of use as the currently recommended service location of the request.

5. The system of claim 2, wherein the at least one processor (112) is further directed to:
select from the at least one historical on-demand service a most recently performed on-demand service;
obtain a most recent actual service location from the most recently performed on-demand service;
determine a frequent actual service location from the at least one historical on-demand service that corresponds to a highest frequency of use; and
determine the currently recommended service location based on the most recent actual service location and the frequent actual service location.

6. The system of claim 5, wherein to determine the currently recommended service location based on the most recent actual service location and the frequent actual service location, the at least one processor (112) is further directed to:
determine a first rating to the most recent actual service location;
determine a second rating to the frequent actual service location;
determine whether the first rating is higher than the second rating;
in response to a determination that the first rating is higher than the second rating, determine the most recent actual service location as the currently recommended service location; and
in response to a determination that the first rating is not higher than the second rating, determine the frequent actual service location as the currently recommended service location.

7. The system of claim 1, wherein the at least one processor (112) is further directed to:
obtain the frequency of use associated with each of the set of historically actual service locations; and
determine, from the set of historically actual service locations, a historically actual service location with highest frequency of use as the currently recommended service location.

8. The system of claim 1, wherein the at least one processor (112) is further directed to:
determine the distance ranking from each of the set of historically actual service locations to the current default service location; and
determine a historically actual service location in the shortest distance as the currently recommended service location.

9. The system of claim 1, wherein the at least one processor (112) is further directed to:
direct the requester terminal to display (1) the currently recommended service location of the request and (2) the actual service locations of at least some of the at least one historical on-demand service or the set of historically actual service locations along with their respective rankings in map format.

10. A method for recommending a service location for an on-demand service using an online on-demand service platform that comprises at least one storage medium (230, 240) storing a set of instructions for recommending a service location for an on-demand service and at least one processor (112) configured to communicate with the at least one storage media (230, 240) to execute the set of stored instructions,
the method comprising:
receiving a request of an on-demand service request entered by a requester on a requester terminal, the service request including a current default service location through a wireless network (120);
determining whether at least one historical on-demand service exists, wherein the at least one historical on-demand service is requested by the requester and each of the at least one historical on-demand service is associated with a historical default service location within a first predetermined distance from the current default service location;
upon existence of the at least one historical on-demand service, determining a currently recommended service location for the request based on the at least one historical on-demand service;
upon non-existence of the at least one historical on-demand service, obtaining a set of historically actual service locations, the set of historically actual service locations associated with a set of historical on-demand services of other requesters;
determining a currently recommended service location for the request based on a distance ranking from each of the set of historically actual service locations to the current default service location or a frequency of use of each of the set of historically actual service locations; and
directing the requester terminal to display the currently recommended service location of the request.

11. The method of claim 10, wherein each of the at least one historical on-demand service is associated with a historical actual service location.

12. The method of claim 11, further comprising:
selecting, by the at least one computer server, from the at least one historical on-demand service a most recently performed on-demand service; and
determining, by the at least one computer server, the historical actual service location of the most recently performed on-demand service as the currently recommended service location of the request.

13. The method of claim 11, further comprising:
determining, by the at least one computer server, the historical actual service location from the at least one historical on-demand service that corresponds to a highest frequency of use as the currently recommended service location of the request.

14. The method of claim 11, wherein the at least one processor (112) is further directed to:
obtaining, by the at least one computer server, the frequency of use associated with each of the set of historically actual service locations; and
determining, by the at least one computer server from the set of historically actual service locations, a historically actual service location with highest frequency of use as the currently recommended service location.

15. A non-transitory machine-readable storage medium (230, 240) storing instructions that, when accessed by at least one processor (112) of an online on-demand service platform from a requester terminal, causes the at least one processor (112) to:
receive a request of an on-demand service request entered by a requester on a requester terminal, the service request including a current default service location through a wireless network (120);
determine whether at least one historical on-demand service exists, wherein the at least one historical on-demand service is requested by the requester and each of the at least one historical on-demand service is associated with a historical default service location within a first predetermined distance from the current default service location;
upon existence of the at least one historical on-demand service, determine a currently recommended service location for the request based on the at least one historical on-demand service;
upon non-existence of the at least one historical on-demand service, obtain a set of historically actual service locations, the set of historically actual service locations associated with a set of historical on-demand services of other requesters;
determine a currently recommended service location for the request based on a distance ranking from each of the set of historically actual service locations to the current default service location or a frequency of use of each of the set of historically actual service locations; and
direct the requester terminal to display the currently recommended service location of the request.

## Patentansprüche

1. System zum Empfehlen eines Servicestandorts für einen On-Demand-Service, umfassend:
mindestens ein Speichermedium (230, 240), das einen Satz von Anweisungen zum Empfehlen eines Servicestandorts für einen On-Demand-Service speichert; und
mindestens einen Prozessor (112), der dazu ausgelegt ist, mit dem mindestens einen Speichermedium (230, 240) zu kommunizieren, um den Satz der gespeicherten Anweisungen auszuführen:
eine Anforderung einer On-Demand-Serviceanforderung zu empfangen, die von einem Anforderer auf einem Anforderer-Endgerät eingegeben wurde, wobei die Serviceanforderung einen aktuellen Standard-Servicestandort über ein drahtloses Netzwerk (120) beinhaltet;
der Prozessor (112) zusätzliche dazu ausgelegt ist zu bestimmen, ob mindestens ein historischer On-Demand-Service existiert, wobei der mindestens eine historische On-Demand-Service von dem Anforderer angefordert wird und
jeder des mindestens einen historischen On-Demand-Service einem historischen Standard-Servicestandort innerhalb einer ersten vorbestimmten Entfernung von dem aktuellen Standard-Servicestandort zugeordnet ist;
bei Existenz des mindestens einen historischen On-Demand-Service eine aktuell empfohlene Position für die Anforderung basierend auf dem mindestens einen historischen On-Demand-Service zu bestimmen;
bei Nichtexistenz des mindestens einen historischen On-Demand-Service einen Satz historisch tatsächlicher Servicestandorte zu erhalten, wobei der Satz historisch tatsächlicher Servicestandorte einem Satz historischer On-Demand-Services anderer Anforderer zugeordnet ist;
einen aktuell empfohlenen Servicestandort für die Anforderung basierend auf einer Entfernungsreihung von jedem des Satzes historisch tatsächlicher Servicestandorte zu dem aktuellen Standard-Servicestandort oder einer Nutzungshäufigkeit jedes des Satzes historisch tatsächlicher Servicestandorte zu bestimmen; und
das anfordernde Endgerät anzuweisen, den aktuell empfohlene Servicestandort der Anforderung anzuzeigen.

2. System nach Anspruch 1, wobei jeder der mindestens einen historischen On-Demand-Services einem historischen tatsächlichen Servicestandort zugeordnet ist.

3. System nach Anspruch 2, wobei der mindestens eine Prozessor (112) ferner dazu angewiesen ist:
aus dem mindestens einen historischen On-Demand-Service, einen zuletzt durchgeführten On-Demand-Service auswählen; und
den historischen, tatsächlichen Standort des zuletzt durchgeführten On-Demand-Service als aktuell empfohlenen Servicestandort für die Anforderung zu bestimmen.

4. System nach Anspruch 2, wobei der mindestens eine Prozessor (112) ferner dazu angewiesen ist:
den historischen, tatsächlichen Standort aus dem mindestens einen historischen On-Demand-Service zu bestimmen, der einer höchsten Nutzungshäufigkeit als aktuell empfohlener Servicestandort der Anforderung entspricht.

5. System nach Anspruch 2, wobei der mindestens eine Prozessor (112) ferner dazu angewiesen ist:
aus dem mindestens einen historischen On-Demand-Service einen zuletzt durchgeführten On-Demand-Service auswählen;
aus dem zuletzt durchgeführten On-Demand-Service einen jüngsten tatsächlichen Servicestandort zu erhalten;
einen häufigen tatsächlichen Servicestandort aus dem mindestens einen historischen On-Demand-Service zu bestimmen, der einer höchsten Nutzungshäufigkeit entspricht; und
den aktuell empfohlenen Servicestandort basierend auf dem jüngsten tatsächlichen Servicestandort und dem häufigen tatsächlichen Servicestandort zu bestimmen.

6. System nach Anspruch 5, wobei, um den aktuell empfohlenen Servicestandort basierend auf dem jüngsten tatsächlichen Servicestandort und dem häufigen tatsächlichen Servicestandort zu bestimmen, der mindestens eine Prozessor (112) ferner dazu angewiesen ist:
eine erste Einstufung für dem jüngsten tatsächlichen Servicestandort zu bestimmen;
eine zweite Einstufung für den häufigen tatsächlichen Servicestandort zu bestimmen;
zu bestimmen, ob die erste Einstufung höher ist als die zweite Einstufung;
als Reaktion auf eine Bestimmung, dass die erste Einstufung höher als die zweite Einstufung ist, den jüngsten tatsächlichen Servicestandort als den aktuell empfohlenen Servicestandort zu bestimmen; und
als Reaktion auf eine Bestimmung, dass die erste Einstufung nicht höher als die zweite Einstufung ist, den häufigen tatsächlichen Servicestandort als den aktuell empfohlenen Servicestandort zu bestimmen.

7. System nach Anspruch 1, wobei der mindestens eine Prozessor (112) ferner dazu angewiesen ist:
die Nutzungshäufigkeit zu erhalten, die jedem Satz von historisch tatsächlichen Servicestandorten zugeordnet ist; und
aus dem Satz der historisch tatsächlichen Servicestandorte einen historisch tatsächlichen Servicestandort mit der höchsten Nutzungshäufigkeit als den aktuell empfohlenen Servicestandort zu bestimmen.

8. System nach Anspruch 1, wobei der mindestens eine Prozessor (112) ferner dazu angewiesen ist:
die Entfernungsreihung von jedem des Satzes historisch tatsächlicher Servicestandorte zu dem aktuellen Standard-Servicestandort zu bestimmen; und
einen historisch tatsächlichen Servicestandort in kürzester Entfernung als den aktuell empfohlenen Servicestandort zu bestimmen.

9. System nach Anspruch 1, wobei der mindestens eine Prozessor (112) ferner dazu angewiesen ist:
das Endgerät des Anfragenden anzuweisen, (1) den aktuell empfohlenen Servicestandort der Anforderung und (2) die tatsächlichen Servicestandorte zumindest einiger der mindestens einen historischen On-Demand-Service oder des Satzes der historischen tatsächlichen Servicestandorte zusammen mit ihren jeweiligen Reihungen in Kartenformat anzuzeigen.

10. Verfahren zum Empfehlen eines Servicestandorts für einen On-Demand-Service unter Verwendung einer Online-On-Demand-Serviceplattform, die mindestens ein Speichermedium (230, 240) umfasst, das einen Satz von Anweisungen zum Empfehlen eines Servicestandorts für einen On-Demand-Service speichert, und mindestens einen Prozessor (112), der dazu ausgelegt ist, mit dem mindestens einen Speichermedium (230, 240) zu kommunizieren, um den Satz von gespeicherten Anweisungen auszuführen,
wobei das Verfahren umfasst:
Empfangen einer Anforderung einer On-Demand-Serviceanforderung, die von einem Anforderer auf einem Anforderer-Endgerät eingegeben wurde, wobei die Serviceanforderung einen aktuellen Standard-Servicestandort über ein drahtloses Netzwerk (120) beinhaltet;
Bestimmen, ob mindestens ein historischer On-Demand-Service existiert, wobei der mindestens eine historische On-Demand-Service von dem Anforderer angefordert wird und jeder des mindestens einen historischen On-Demand-Service einem historischen Standard-Servicestandort innerhalb einer ersten vorbestimmten Entfernung von dem aktuellen Standard-Servicestandort zugeordnet ist;
Bei Existenz des mindestens einen historischen On-Demand-Service, Bestimmen eines aktuell empfohlenen Servicestandorts für die Anforderung basierend auf dem mindestens einen historischen On-Demand-Service;
bei Nichtexistenz des mindestens einen historischen On-Demand-Service, Erhalten eines Satzes historisch tatsächlicher Servicestandorte, wobei der Satz historisch tatsächlicher Servicestandorte einem Satz historischer On-Demand-Services anderer Anforderer zugeordnet ist;
Bestimmen eines aktuell empfohlenen Servicestandorts für die Anforderung basierend auf einer Entfernungsreihung von jedem des Satzes historisch tatsächlicher Servicestandorte zu dem aktuellen Standard-Servicestandort oder einer Nutzungshäufigkeit jedes des Satzes historisch tatsächlicher Servicestandorte; und
Anweisen, des anfordernden Endgerätes, den aktuell empfohlene Servicestandort der Anforderung anzuzeigen.

11. Verfahren nach Anspruch 10, wobei jeder der mindestens einen historischen On-Demand-Services einem historischen tatsächlichen Servicestandort zugeordnet ist.

12. Verfahren nach Anspruch 11, ferner umfassend:
Auswählen eines zuletzt durchgeführten On-Demand-Service aus dem mindestens einen historischen On-Demand-Service durch den mindestens einen Computerserver; und
Bestimmen, durch den mindesten einen Computerserver, des historischen tatsächlichen Standorts des zuletzt durchgeführten On-Demand-Service als aktuell empfohlenen Servicestandort der die Anforderung.

13. Verfahren nach Anspruch 11, ferner umfassend:
Bestimmen, durch den mindesten einen Computerserver, des historischen, tatsächlichen Standorts aus dem mindestens einen historischen On-Demand-Service, der einer höchsten Nutzungshäufigkeit als aktuell empfohlener Servicestandort der Anforderung entspricht.

14. Verfahren nach Anspruch 11, wobei der mindestens eine Prozessor (112) ferner dazu angewiesen ist:
Erhalten, durch den mindestens einen Computerserver, der Nutzungshäufigkeit, die jeder des Satzes von historisch tatsächlichen Servicestandorten zugeordnet ist; und
Bestimmen, durch den mindestens einen Computerserver, aus dem Satz von historisch tatsächlichen Servicestandorten, eines historisch tatsächlichen Servicestandorts mit der höchsten Nutzungshäufigkeit als den aktuell empfohlenen Servicestandort.

15. Nichtflüchtiges, maschinenlesbares Speichermedium (230, 240), das Anweisungen speichert, die, wenn von einem Anforderer-Endgerät aus auf mindestens einen Prozessor (112) einer Online-On-Demand-Serviceplattform zugegriffen wird, den mindestens einen Prozessor (112) dazu veranlassen:
eine Anforderung einer On-Demand-Serviceanforderung zu empfangen, die von einem Anforderer auf einem Anforderer-Endgerät eingegeben wurde, wobei die Serviceanforderung einen aktuellen Standard-Servicestandort über ein drahtloses Netzwerk (120) beinhaltet;
zu bestimmen, ob mindestens ein historischer On-Demand-Service existiert, wobei der mindestens eine historische On-Demand-Service von dem Anforderer angefordert wird und jeder des mindestens einen historischen On-Demand-Service einem historischen Standard-Servicestandort innerhalb einer ersten vorbestimmten Entfernung von dem aktuellen Standard-Servicestandort zugeordnet ist;
bei Existenz des mindestens einen historischen On-Demand-Service eine aktuell empfohlene Position für die Anforderung basierend auf dem mindestens einen historischen On-Demand-Service zu bestimmen;
bei Nichtexistenz des mindestens einen historischen On-Demand-Service einen Satz historisch tatsächlicher Servicestandorte zu erhalten, wobei der Satz historisch tatsächlicher Servicestandorte einem Satz historischer On-Demand-Services anderer Anforderer zugeordnet ist;
einen aktuell empfohlenen Servicestandort für die Anforderung basierend auf einer Entfernungsreihung von jedem des Satzes historisch tatsächlicher Servicestandorte zu dem aktuellen Standard-Servicestandort oder einer Nutzungshäufigkeit jedes des Satzes historisch tatsächlicher Servicestandorte zu bestimmen; und
das Anforderer-Endgerät anzuweisen, den aktuell empfohlene Servicestandort der Anforderung anzuzeigen.

## Revendications

1. Système pour recommander une localisation de service pour un service à la demande, comprenant :
au moins un support de stockage (230, 240) stockant un ensemble d'instructions pour recommander une localisation de service pour un service à la demande ; et
au moins un processeur (112) configuré pour communiquer avec l'au moins un support de stockage (230, 240) pour exécuter l'ensemble d'instructions stockées pour :
recevoir une demande d'une demande de service à la demande introduite par un demandeur sur un terminal de demandeur, la demande de service incluant une localisation de service par défaut actuelle via un réseau sans fil (120) ;
le processeur (112) étant de plus configuré pour déterminer s'il existe au moins un service à la demande historique, l'au moins un service à la demande historique étant demandé par le demandeur et chacun des au moins un service à la demande historique étant associé à une localisation de service par défaut historique située dans un rayon d'une première distance prédéterminée par rapport à la localisation de service par défaut actuelle ;
lorsque l'au moins un service à la demande historique existe, déterminer une localisation de service actuellement recommandée pour la demande en fonction de l'au moins un service à la demande historique ;
lorsque l'au moins un service à la demande historique n'existe pas, obtenir un ensemble de localisations de service historiquement réelles, l'ensemble de localisations de service historiquement réelles étant associé à un ensemble de services à la demande historiques d'autres demandeurs ;
déterminer une localisation de service actuellement recommandée pour la demande en fonction d'un classement de distance entre chaque localisation de l'ensemble de localisations de service historiquement réelles et la localisation de service par défaut actuelle ou d'une fréquence d'utilisation de chaque localisation de l'ensemble de localisations de service historiquement réelles ; et
commander le terminal de demandeur pour qu'il affiche la localisation de service actuellement recommandée de la demande.

2. Système selon la revendication 1, dans lequel chacun des au moins un service à la demande historique est associé à une localisation de service réelle historique.

3. Système selon la revendication 2, dans lequel l'au moins un processeur (112) est en outre conçu pour :
sélectionner parmi l'au moins un service à la demande historique un service à la demande le plus récemment exécuté ; et
déterminer la localisation de service réelle historique du service à la demande le plus récemment exécuté en tant que localisation de service actuellement recommandée de la demande.

4. Système selon la revendication 2, dans lequel l'au moins un processeur (112) est en outre conçu pour :
déterminer la localisation de service réelle historique parmi l'au moins un service à la demande historique qui correspond à une fréquence d'utilisation la plus élevée en tant que localisation de service actuellement recommandée de la demande.

5. Système selon la revendication 2, dans lequel l'au moins un processeur (112) est en outre conçu pour :
sélectionner parmi l'au moins un service à la demande historique un service à la demande le plus récemment exécuté ;
obtenir une localisation de service réelle la plus récente parmi le service à la demande le plus récemment exécuté ;
déterminer une localisation de service réelle fréquente parmi l'au moins un service à la demande historique qui correspond à une fréquence d'utilisation la plus élevée ; et
déterminer la localisation de service actuellement recommandée en fonction de la localisation de service réelle la plus récente et de la localisation de service réelle fréquente.

6. Système selon la revendication 5, dans lequel, pour déterminer la localisation de service actuellement recommandée en fonction de la localisation de service réelle la plus récente et de la localisation de service réelle fréquente, l'au moins un processeur (112) est en outre conçu pour :
déterminer une première note pour la localisation de service réelle la plus récente ;
déterminer une deuxième note pour la localisation de service réelle fréquente ;
déterminer si la première note est plus élevée que la deuxième note ;
en réponse à une détermination du fait que la première note est plus élevée que la deuxième note, déterminer la localisation de service réelle la plus récente en tant que localisation de service actuellement recommandée ; et
en réponse à une détermination du fait que la première note n'est pas plus élevée que la deuxième note, déterminer la localisation de service réelle fréquente en tant que localisation de service actuellement recommandée.

7. Système selon la revendication 1, dans lequel l'au moins un processeur (112) est en outre conçu pour :
obtenir la fréquence d'utilisation associée à chaque localisation de l'ensemble de localisations de service historiquement réelles ; et
déterminer, parmi l'ensemble de localisations de service historiquement réelles, une localisation de service historiquement réelle ayant la fréquence d'utilisation la plus élevée en tant que localisation de service actuellement recommandée.

8. Système selon la revendication 1, dans lequel l'au moins un processeur (112) est en outre conçu pour :
déterminer le classement de distance entre chaque localisation de l'ensemble de localisations de service historiquement réelles et la localisation de service par défaut actuelle ; et
déterminer une localisation de service historiquement réelle située à la distance la plus courte en tant que localisation de service actuellement recommandée.

9. Système selon la revendication 1, dans lequel l'au moins un processeur (112) est en outre conçu pour :
commander au terminal de demandeur d'afficher (1) la localisation de service actuellement recommandée de la demande et (2) les localisations de service réelles d'au moins certains de l'au moins un service à la demande historique ou de l'ensemble de localisations de service historiquement réelles avec leurs classements respectifs au format carte.

10. Procédé pour recommander une localisation de service pour un service à la demande en utilisant une plateforme de service à la demande en ligne qui comprend au moins un support de stockage (230, 240) stockant un ensemble d'instructions pour recommander une localisation de service pour un service à la demande et au moins un processeur (112) configuré pour communiquer avec l'au moins un support de stockage (230, 240) pour exécuter l'ensemble d'instructions stockées,
le procédé comprenant :
la réception d'une demande d'une demande de service à la demande introduite par un demandeur sur un terminal de demandeur, la demande de service incluant une localisation de service par défaut actuelle via un réseau sans fil (120) ;
la détermination du fait qu'il existe ou non au moins un service à la demande historique, l'au moins un service à la demande historique étant demandé par le demandeur et chacun des au moins un service à la demande historique étant associé à une localisation de service par défaut historique située dans un rayon d'une première distance prédéterminée par rapport à la localisation de service par défaut actuelle ;
lorsque l'au moins un service à la demande historique existe, la détermination d'une localisation de service actuellement recommandée pour la demande en fonction de l'au moins un service à la demande historique ;
lorsque l'au moins un service à la demande historique n'existe pas, l'obtention d'un ensemble de localisations de service historiquement réelles, l'ensemble de localisations de service historiquement réelles étant associé à un ensemble de services à la demande historiques d'autres demandeurs ;
la détermination d'une localisation de service actuellement recommandée pour la demande en fonction d'un classement de distance entre chaque localisation de l'ensemble de localisations de service historiquement réelles et la localisation de service par défaut actuelle ou d'une fréquence d'utilisation de chaque localisation de l'ensemble de localisations de service historiquement réelles ; et
la commande du terminal de demandeur pour qu'il affiche la localisation de service actuellement recommandée de la demande.

11. Procédé selon la revendication 10, dans lequel chacun des au moins un service à la demande historique est associé à une localisation de service réelle historique.

12. Procédé selon la revendication 11, comprenant en outre :
la sélection, par l'au moins un serveur informatique, parmi l'au moins un service à la demande historique, d'un service à la demande le plus récemment exécuté ; et
la détermination, par l'au moins un serveur informatique, de la localisation de service réelle historique du service à la demande le plus récemment exécuté en tant que localisation de service actuellement recommandée de la demande.

13. Procédé selon la revendication 11, comprenant en outre :
la détermination, par l'au moins un serveur informatique, de la localisation de service réelle historique parmi l'au moins un service à la demande historique qui correspond à une fréquence d'utilisation la plus élevée en tant que localisation de service actuellement recommandée de la demande.

14. Procédé selon la revendication 11, dans lequel l'au moins un processeur (112) est en outre conçu pour permettre :
l'obtention, par l'au moins un serveur informatique, de la fréquence d'utilisation associée à chaque localisation de l'ensemble de localisations de service historiquement réelles ; et
la détermination, par l'au moins un serveur informatique, parmi l'ensemble de localisations de service historiquement réelles, d'une localisation de service historiquement réelle ayant la fréquence d'utilisation la plus élevée en tant que localisation de service actuellement recommandée.

15. Support de stockage non transitoire lisible par une machine (230, 240) stockant des instructions qui, lorsqu'au moins un processeur (112) d'une plateforme de service à la demande en ligne y accède depuis un terminal de demandeur, amènent l'au moins un processeur (112) à :
recevoir une demande d'une demande de service à la demande introduite par un demandeur sur un terminal de demandeur, la demande de service incluant une localisation de service par défaut actuelle via un réseau sans fil (120) ;
déterminer si l'au moins un service à la demande historique existe ou non,
l'au moins un service à la demande historique étant demandé par le demandeur et chacun des au moins un service à la demande historique étant associé à une localisation de service par défaut historique située dans un rayon d'une première distance prédéterminée par rapport à la localisation de service par défaut actuelle ;
lorsque l'au moins un service à la demande historique existe, déterminer une localisation de service actuellement recommandée pour la demande en fonction de l'au moins un service à la demande historique ;
lorsque l'au moins un service à la demande historique n'existe pas, obtenir un ensemble de localisations de service historiquement réelles, l'ensemble de localisations de service historiquement réelles étant associé à un ensemble de services à la demande historiques d'autres demandeurs ;
déterminer une localisation de service actuellement recommandée pour la demande en fonction d'un classement de distance entre chaque localisation de l'ensemble de localisations de service historiquement réelles et la localisation de service par défaut actuelle ou d'une fréquence d'utilisation de chaque localisation de l'ensemble de localisations de service historiquement réelles ; et
commander le terminal de demandeur pour qu'il affiche la localisation de service actuellement recommandée de la demande.
